# EUROPÄISCHE PATENTSCHRIFT

(11) **EP 0 289 982 B1**
(45) Veröffentlichungstag und Bekanntmachung des Hinweises auf die Patenterteilung: **16.03.1994**
(21) Anmeldenummer: 88107042.9
(22) Anmeldetag: 03.05.1988
(51) Int. Cl.: C23G 3/00, C23G 5/04, B01D 12/00

(54) **Einrichtung zum Trocknen von Gegenständen in Reinigungsanlagen**
Drying apparatus for objects in cleaning plants
Appareil pour sécher des objets dans des installations de nettoyage

(30) Priorität: 07.05.1987 DE 3715168
(43) Veröffentlichungstag der Anmeldung: 09.11.1988
(73) Patentinhaber: HÖCKH METALL-REINIGUNGS-ANLAGEN GMBH, D-75305 Neuenbürg (DE)
(72) Erfinder: Höckh, Jürgen, D-7540 Neuenbürg (DE); Koppelhuber, Franz, D-7136 Ötisheim (DE)
(74) Vertreter: Reinhardt, Harry

(56) Entgegenhaltungen:
- EP-A- 0 087 055
- EP-A- 0 157 090
- EP-A- 0 276 876
- DE-A- 2 754 724
- FR-A- 2 424 767
- GB-A- 1 135 181
- US-A- 4 101 340

## Beschreibung

Die Erfindung bezieht sich auf eine Einrichtung zum Trocknen von Gegenständen in Reinigungs- und/oder Entfettungsanlagen entsprechend dem Oberbegriff des Patentanspruches 1.

Bei einer bekannten Einrichtung dieser Art (US-PS 3,610,260) ist die Reinigungskammer lediglich gegen das Entweichen der Lösungsmitteldämpfe abgeschlossen. Getrocknet wird das aus der Reinigungskammer transportierte Waschgut mittels einer Heizeinrichtung in eine, gesonderten Trockenraum. Die dabei entstehenden Dämpfe werden mittels einer Pumpe unter geringem Unterdruck abgesaugt, um das aufgrund der Wirkung der Heizeinrichtung verdampfte Lösungsmittel zurückzugewinnen. Eine zufriedenstellende Trocknung ohne Heizeinrichtung ist nicht erreichbar. Überdies ist für die Aufheizung zusätzliche Energie erforderlich. Zudem ist der Trockenraum aufgrund seiner Ausbildung einem Trocknen unter Vakuum nicht zugänglich.

Aus der DE-OS 27 54 724 ist eine gasdichte Vorrichtung bekannt, die aus einem Rohr besteht, aus dem mit Evakuiermitteln feuchtes Gas abgezogen wird, das kontinuierlich zugeführte Teile trocknet. Dabei wird im Innern des Rohres und auch innerhalb der das Rohr umgebenden Kammer permanent ein verminderter Druck aufrechterhalten. Grundsätzlich sind somit zwar Evakuiermittel vorhanden, die jedoch nicht für den Aufbau des Vakuums, sondern lediglich zum Absaugen der Dämpfe eingesetzt werden. Die Kammer ist aufgrund ihrer Eignung für den kontinuierlichen Wasch- und Trocknungsprozeß auch nicht für den Aufbau eines Vakuums ausgelegt. Lediglich die gesamte Vorrichtung an sich ist gasdicht ausgelegt, so daß sich eine Verbindung zwischen dem Rohr und der Gehäusekammer einstellt und ein Auslecken von Lösungsmitteldämpfen stattfindet. Durch diese Undichtigkeiten entsteht beim versuchten Aufbau eines Vakuums ein Luftstrom, der den Aufbau des Vakumms zunichte macht. Der verminderte Druck wird dabei dadurch erreicht, daß der zugeführte Luftstrom geringer ist als der abgezogene.

Aus der EP-OS 0 087 055 ist ein Einkammerverfahren bekannt, wobei die Behandlungskammer beschickt und entleert wird und zugleich als Trocknungskammer dient. Allerdings beruht das Trocknungsprinzip auf der Verdünnung der zugeführten Luft bis unterhalb der maximalen Arbeitsplatzkonzentration, so daß trotzdem Lösungsmittel ungehindert in die Umwelt gelangen kann. Weder ist der Waschbehälter für ein Vakuum ausgelegt, noch wird eine Vakuumpumpe eingesetzt.

Aus der GB-PS 1 135 181 ist ferner noch eine hermetisch verschließbare Kammer bekannt, die für den Aufbau eines Vakuums geeignet ist, bei der jedoch das Vakuum vor dem Waschen und somit nicht zum Trocknen aufgebaut wird. Insofern ist auch dort die Vakuumpumpe nicht zur Trocknung vorgesehen.

Bei einer bekannten vergleichbaren Einrichtung (DE-OS 33 19 094) wird eine mechanische Pumpe oder eine Treibmittelpumpe eingesetzt, um aus einer der Reinigungskammer vorgeschalteten Vorkammer Lösungsmitteldämpfe abzusaugen. Diese Einrichtung dient aber nicht zur Trocknung, sondern ausschließlich zur Verminderung der in die Atmosphäre austretenden Dämpfe und deren Rückgewinnung.

Es ist auch bekannt, zur Trocknung eine beliebige Vakuumpumpe, z.B. eine Flüssigkeitsringpumpe zu verwenden (DE-Z vt., "Verfahrenstechnik", 15 (1981) Nr. 2, S. 116,117).

Davon ausgehend liegt der Erfindung die Aufgabe zugrunde, eine Einrichtung gemäß dem Oberbegriff des Patentanspruches 1 derart weiterzubilden, daß das Waschgut rascher und intensiver getrocknet werden kann und dadurch die Belastung der Arbeitsräume und der Umwelt minimiert werden kann.

Diese Aufgabe wird erfindungsgemäß durch die im Kennzeichen des Patentanspruchs 1 genannten Merkmale gelöst.

Bei einer solchen Ausbildung kann die Trocknung durch Zugabe atmosphärischer Luft und der Aufrechterhaltung des Vakuums wesentlich intensiviert werden, wobei die relative Luftfeuchtigkeit der zugeführten Luft in aller Regel unter der Sättigungsgrenze liegt. Dadurch steigt die Aufnahmefähigkeit der Luft in der Reinigungskammer, wodurch vor allem bei Gegenständen mit schwer zugänglichen 'Innenräumen' ein ausreichender Trocknungsgrad bei verhältnismäßig geringem Zeitaufwand erreichbar ist.

Beim Einsatz einer Treibmittelpumpe gemäß Patentanspruch 2 können bei entsprechend dichter Auslegung der Gesamtanlage zumindest bei großen Anlagen bisher unerreichte Unterdrücke und Trocknungsintensitäten erreicht werden. Aufgrund ihres einfachen Aufbaues ohne bewegliche Teile, die von aggressiven Lösungsmitteln angregriffen werden können und beim Aufbau des Vakuums einem erhöhten Verschleiß ausgesetzt sind, ist sie erheblich verschleißfester als übliche Vakuumpumpen. Die zum Betrieb der Treibmittelpumpe erforderliche Umwälzpumpe hingegen kann beliebig gebaut sein, da sie keinem Vakuum ausgesetzt ist. Zudem hat diese Ausbildung den Vorteil, daß die abgesaugten Dämpfe bereits in der Treibmittelpumpe beim Kontakt mit den im Treibmittel-Vorratsbehälter gekühlten Treibmittel zu einem wesentlichen Teil kondensieren, wo sie auf das einströmende bis in die Nähe des Erstarrungspunktes gekühlte Treibmittel stoßen.

Bei einer dosierten Zugabe der atmosphärischen Luft gemäß Patentanspruch 3 kann empirisch die optimale Zugabemenge dem zu trocknenden Waschgut angepaßt werden.

Bei einer Ausbildung nach Patentanspruch 4 kann der für die Trocknung erforderliche Zeitaufwand weiter verringert werden, indem die zugeführte Luft bei ihrer Einspeisung zusätzlich erwärmt wird. Während z.B. die Luft bei 20°C bei Verwendung von Perchloräthylen (PER) nur 150 g PER/m³ aufnehmen kann, kann kann eine auf 121° C erwärmte Zuluft 5,15 kg PER/m³ aufnehmen. Dadurch kann eine Verringerung der Lösungsmittelkonzentration nach Trocknung im Waschkorb von 14.000 ppm auf 10 ppm PER erreicht werden.

Bei einer Ausbildung nach Patentanspruch 9 können auch die abgewaschenen, im Siebkorbeinsatz zurückgehaltenen Teile den Trocknungsprozess unterworfen werden. Vor allem vor der Herausnahme des Siebkorbeinsatzes können dadurch die Lösungsmittelkonzentrationen am Arbeitsplatz und die Lösungsmittelrückstände, die in die Umwelt gelangen, verringert werden.

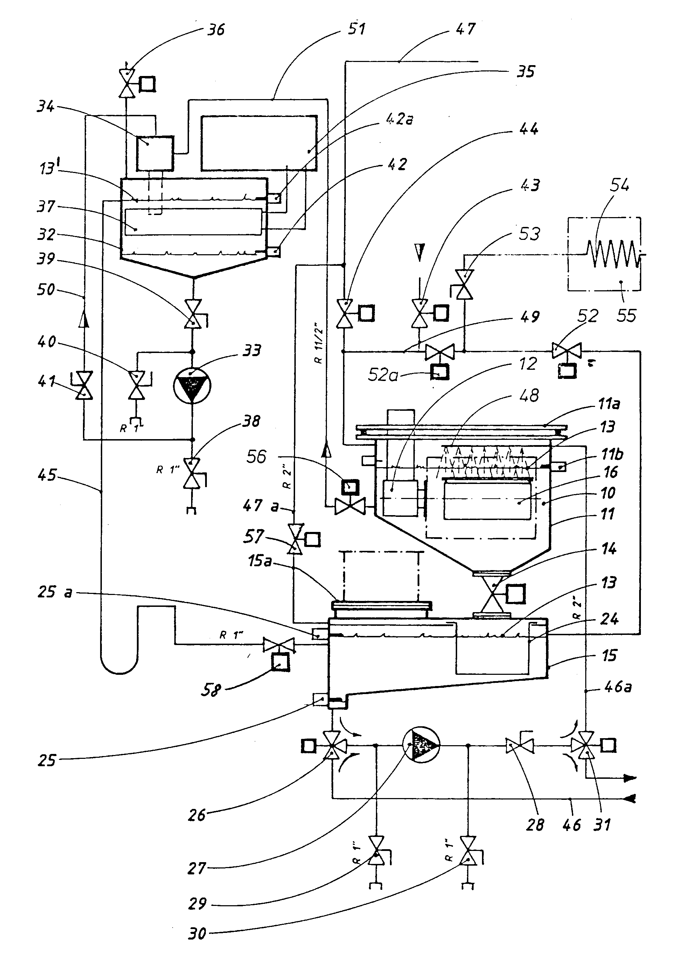

Nachstehend wird die Erfindung anhand der Zeichnung an einem Ausführungsbeispiel erläutert.

Die einzige Figur zeigt die schematisch dargestellte Einrichtung.

Die zu trocknenden Gegenstände, z.B. mechanisch bearbeitete Werkstücke wie Dreh- und Stanzteile werden im folgenden als Waschgut bezeichnet. Im Reinigungsmittelkreislauf der Reinigungs- und/oder Entfettungsanlage befinden sich ein Vorratsbehälter (zeichnerisch nicht dargestellt) für das Reinigungsmittel sowie ein Waschbehälter 11. Ferner in aller Regel Filter, insbesondere Feinfilter, zum Auffangen von Festteilen und vielfach auch eine Destillationsanlage zur Regeneration der Reinigungsflüssigkeit. Der Reinigungsflüssigkeitskreislauf wird mit Hilfe einer Pumpe 27 angetrieben und ist mittels Drei-Wege-Ventilen 26,31 steuerbar, die im Kreislauf vor bzw. hinter der Pumpe 27 angeordnet sind. In dem mit Deckel 11a dicht verschließbaren, für den Aufbau eines Vakuums ausgelegten Waschbehälter 11, der eine Reinigungskammer 10 umfaßt, ist ein Sprührohr 48 angeordnet. Dessen Düsen münden über einen mittels Dreh- oder Schaukelantrieb 12 bewegbaren Waschgutkorb 16, in welchem das Waschgut aufgenommen ist. Der Waschgutkorb 16 bildet mit dem Deckel 11a und dem Dreh- oder Schaukelantrieb 12 eine bauliche Einheit, die von dem die Reinigungskammer 10 bildenden Waschbehälter 11 abhebbar bzw. auf diesen Waschbehälter 11 aufsetzbar ist. Der Waschbehälter 11 ist über ein Verschlußventil 14 mit einem ebenfalls für den Aufbau eines Vakuums ausgelegten Auffangbehälter 15 verbunden. Im Auffangbehälter 15 ist ein Siebkorbeinsatz 24 derart angeordnet, daß die aus der Reinigungskammer 10 in den Auffangbehälter 15 ablaufende Reinigungsflüssigkeit von oben in den Siebkorbeinsatz 24 gelangt, wo der Großteil der festen Schmutzteile angefangen wird. Niveauwächter 25,25a im Auffangbehälter 15 verhindern gleichermaßen eine Überfüllung wie eine ungewollte Entleerung des Auffangbehälters. Das im Kreislauf zwischen der Pumpe 27 und den dahinter liegenden Drei-Wege-Ventil angeordnete Sperrventil 28 dient Wartungszwecken. Abzweigungen des Kreislaufs führen je über ein Sperrventil 29 bzw. 30 zu einem Reinigungsflüssigkeitstank und ermöglichen eine Entleerung bzw. die Befüllung des Reinigungskreislaufs. Die Reinigungskammer 10 ist über eine Entlüftungsleitung 47 mit dem Reinigungsmittel-Vorratsbehälter des Reinigungsmittelkreislaufs und über eine Belüftungsleitung 49 mit der Atmosphäre verbindbar. Die Belüfungsleitung 49 ist über ein Ventil 52a mit einer Luftzuführung verbindbar, die über ein Drosselventil 53 steuerbar ist. Über einen Wärmetauscher 54 kann von einer Wärmequelle 55 Wärme zur Erwärmung der Zuluft herangezogen werden. Eine Zweigleitung 47a verbindet die Entlüfungsleitung 47 mit dem Auffangbehälter 15. Der Auffangbehälter 15 kann bei geschlossenem Ventil 52a und offenem Ventil 52 ebenfalls mit bedarfsweise erwärmter Luft versorgt werden. Der Siebkorbeinsatz 24 im Auffangbehälter 15 ist horizontal (in der Zeichnung nach links) verfahrbar und aus diesem über eine Öffnung vertikal herausfahrbar, welche mittels Deckel 15a verschlossen werden kann.

Im zeichnerisch dargestellten Ausführungsbeispiel findet als Vakuumpumpe eine Treibmittelpumpe 34 Verwendung. Die schließbare Reinigungskammer 10 ist über eine Saugleitung 51 mit Absperrventil 56 mit dem Saugstutzen der Treibmittelpumpe (Strahlpumpe 34) verbunden. Die Strahlpumpe liegt in einem Treibmittelkreislauf und ist mit Hilfe einer Umwälzpumpe 33 über eine Treibmittelleitung 50 aus einem Treibmittel-Vorratsbehälter 32 gespeist. Zur Kühlung des Treibmittels 13' im Treibmittel-Vorratsbehälter 32 ist eine Kühlvorrichtung 35,37 vorgesehen. Diese ermöglicht eine Kühlung des Treibmittels bis in die Nähe seines Erstarrungspunktes, das bei Verwendung von Tetrachloräthylen bei ca. -20°C und bei Verwendung von mit Detergentien versetztem Wasser bei maximal 2°C liegt. Im Ausführungsbeispiel findet als Kühleinrichtung 35,37 ein nach dem Kompressionsverfahren arbeitendes Kälteaggregat 35 Verwendung. Der als Wärmetauscher 37 ausgebildete Verdampfer dieses Kälteaggregates 35 ist im Treibmittel-Vorratsbehälter 32 innerhalb des Treibmittels 13' angeordnet. Der Kompressor des Kälteaggregats 35 liegt außerhalb des Treibmittel-Vorratsbehälters 32, wie aus der Zeichnung ersichtlich. Der geschlossene Treibmittel-Vorratsbehälter 32 kann über eine Entlüftungsleitung 36 mit der Atmosphäre in Verbindung gesetzt werden. Er ist außerdem über eine Kondensatrücklaufleitung 45 mit dem auf niedrigem Niveau angeordneten Auffangbehälter 15 verbunden. Die Saugstärke der Strahlpumpe 34 ist mit Hilfe eines im Treibmittelkreislauf vorgesehenen Trosselventil 41 steuerbar. Eei zirkulierendem Treibmittelkreislauf steht der mit Niveauwächter 25,25a versehene Treibmittel-Vorratsbehälter 32 etwa unter atmosphärischem Druck. Als Treibmittel findet grundsätzlich die Reinigungsflüssigkeit Verwendung bzw. Weisser.

Die Einrichtung arbeitet wie folgt:
Bei Betrieb der Reinigungs- und/oder Entfettungsanlage wechseln zeitliche Phasen, in welchen das mit Hilfe des Waschgutkorbes 16 in die Reinigungskammer 10 eingefahrene Waschgut gewaschen bzw. entfettet und dieses Waschgut sodann getrocknet wird. In der Waschphase gelangt die Reinigungsflüssigkeit über die Leitung 46 vom Vorratsbehälter des Reinigungsflüssigkeitskreislaufes über das offene Drei-Wege-Ventil 26 und die antreibende Pumpe 27 über das offene Sperrventil 48 zum Drei-Wege-Ventil 31 und von dort über die Leitung 46a zum Sprührohr 48 der Waschkammer 10. Dadurch wird das im Waschgutkorb 16 befindliche Waschgut mit Reinigungsflüssigkeit bespült, wobei sich die geschlossene Reinigungskammer 10 füllt. Dadurch gelangt das Waschgut unter den im Behälter 11 steigenden Flüssigkeitsspiegel. Dabei wird der Waschvorgang durch die Dreh- oder Schaukelbewegung des Waschgutkorbes unterstützt, welche mit Hilfe des Dreh- oder Schaukelantriebs 12 verursacht ist. Sobald der Flüssigkeitsspiegel den Niveauwächter 11b erreicht, wird die Zufuhr weiteren Reinigungsmittels eingestellt. Bei der beschriebenen Flutung der Waschkammer kann die verdrängte Luft über die Entlüftungsleitung 47 bei offenem Entlüftungsventil 44 entweichen. Nach Abschluß der Waschphase wird die Reinigungsflüssigkeit 13 über das offene Verschlußventil 14 in den Auffangbehälter 15 entleert. Sie kann von dort über das Drei-Wege-Ventil 26, die Pumpe 27 und das Drei-Wege-Ventil 31 in eine zum Vorratsbehälter des Reinigungsflüssigkeitskreislaufs führende Leitung befördert werden. In der anschließenden Trocknungsphase steht die geschlossene, von der Reinigungsflüssigkeit 13 entleerte Reinigungskammer 10 über die Saugleitung 51 mit der Strahlpumpe 34 zur Erzeugung eines Vakuums in Verbindung. Der Treibmittelkreislauf wird bei arbeitendem Kälteaggregat in Betrieb gesetzt, dadurch wird in der Saugleitung 51 ein intensiver, mit den Dämpfen der Reinigungsflüssigkeit gesättigter Gasstrom von der Waschkammer 10 zur Strahlpumpe 34 erzeugt, wo dieser Gasstrom auf das bis in die Nähe des Erstarrungspunktes heruntergekühlte Treibmittel 13′ trifft, welches der Reinigungsflüssigkeit entspricht. Durch ständige Einbringung des Kondensats in den Treibmittel-Vorratsbehälter 32 steigt der Treibmittelspiegel bis zu einem vom Kondensatrücklauf 45 bestimmten Niveau. Zudem wird der Treibmittelspiegel im Treibmittel-Vorratsbehälter 32 von Niveauwächtern 42,42a überwacht. Nach geraumer Zeit kann das Ergebnis der Trocknung durch Aufbringen eines Vakuums allein nicht mehr gesteigert werden. Daher öffnet bei Erreichen eines voreingestellten Unterdruckes ein Ventil 52a und führt eine über ein Trosselventil 53 empirisch festgelegte Menge an Luft über die Belüftungsleitung 49 der Reinigungskammer 10 zu. Die zugeführte Luft kann bedarfsweise von einer Wärmequelle 55 über einen Wärmetauscher 54 erwärmt werden. Durch Zufuhr dieser Luft in die Reinigungskammer 10 wird nun weitere Flüssigkeit aufgenommen, da die relative Luftfeuchtigkeit in der Reinigungskammer 10 sinkt. Während dieser Zeit bleibt der voreingestellte Unterdruck ständig erhalten. Nach Ablauf einer zuvor festgelegten Zeitspanne schließt das Ventil 52a und über das Ventil 43 wird der Druck in der Reinigungskammer 10 abgebaut.

Der im Auffangbehälter 15 angeordnete Siebkorbeinsatz 24 muß von Zeit zu Zeit entleert werden. Um dabei ein Entweichen von Lösemittelrückständen in die Luft des Arbeitsraumes bzw. in die Umwelt zu vermeiden, werden die Siebrückstände getrocknet. Dazu kann der Auffangbehälter 15 nach Ablassen der Flüssigkeit 13 bei geschlossenen Ventils 57,58und geöffnetem Verschlußventil 14 ebenfalls unter Vakuum gesetzt werden. Bedarfsweise wird dabei erwärmte Luft bei geschlossenem Ventil 52a und geöffnetem Ventil 52 zugeführt. Nach erfolgter Trocknung werden eventuell aufgewirbelte Staubteilchen bei Abbau des Vakuums durch die Luftzufuhr über die Belüftungsleitung 49 wieder in den Siebkorbeinsatz 24 befördert.

## Patentansprüche

1. Einrichtung zum Trocknen von Gegenständen, z.B. von mechanisch bearbeiteten Werkstücken wie Dreh- und Stanzteilen (Waschgut) in Reinigungs- und/oder Entfettungsanlagen, mit einem Reinigungsflüssigkeitkreislauf, in dem sich wenigstens ein Vorratsbehälter für das Reinigungsmittel sowie wenigstens ein schließbarer Waschbehälter (11) mit einem Waschgutträger (16) befindet, mit einer Vorrichtung zum Trocknen des Waschgutes, sowie mit einer Einrichtung zur Rückgewinnung der beim Trocknen des Waschgutes entstehenden Lösungsdämpfe, mit einer Kühlvorrichtung(35,37) zur Kondensation der Lösungsmitteldämpfe, dadurch gekennzeichnet, daß der sowohl gegenüber der Atmosphäre als auch gegenüber dem Reinigungsflüssigkeitskreislauf verschließbare Waschbehälter (11) zugleich den Trockenraum für das chargenweise Waschen und Trocknen des Waschgutes bildet, für den Aufbau eines Vakuums ausgelegt und während der durch eine Vakuumpumpe (34) bewirkten Trocknungsphase über ein Ventil (52a bzw. 53) belüftbar ist und daß als Vakuumpumpe eine mit dem Reinigungsmittel betriebene Treibmittelpumpe (Strahlpumpe 34) vorgesehen ist.

2. Einrichtung nach Patentanspruch 1, dadurch gekennzeichnet, daß der Waschbehälter (11) während der Trocknungsphase über das Ventil (52a) und über das Drosselventil (53) belüftbar und die zugeführte Luft vor ihrer Einspeisung von einer Wärmequelle (55) über einen Wärmetauscher (54) aufheizbar ist.

3. Einrichtung nach einem der vorhergehenden Patentansprüche, dadurch gekennzeichnet, daß der eine Reinigungskammer (10) bildende Waschbehälter (11) über ein Verschlußventil (14) mit einem Auffangbehälter (15) verbindbar ist, der über eine Kondensat-Rücklaufleitung (45) mit dem auf höherem Niveau angeordneten Treibmittel-Vorratsbehälter (32) in Verbindung steht.

4. Einrichtung nach einem der vorhergehenden Patentansprüche, dadurch gekennzeichnet, daß die Reinigungskammer (10) über eine Entlüftungsleitung (47) mit dem Reinigungsmittel-Vorratsbehälter des Reinigungsmittelkreislaufs und über eine Belüftungsleitung (49) mit der Atmosphäre bzw. der Luftzuführung (Ventil 52a) verbindbar ist, wobei die Entlüftungsleitung (47) über eine Zweigleitung (47a) mit dem Auffangbehälter (15) in Verbindung steht.

5. Einrichtung nach einem der vorhergehenden Patentansprüche, dadurch gekennzeichnet, daß ein Siebkorbeinsatz (24) im Auffangbehälter (15) horizonal verfahrbar und aus diesem über eine mittels Deckel (15a) verschließbare Öffnung vertikal herausfahrbar ist.

6. Einrichtung nach Patentanspruch 5, dadurch gekennzeichnet, daß der Inhalt des Siebkorbeinsatzes (24) bedarfsweise bei offenem Verschlußventil (14) und geschlossenem Ventil (57) einem Unterdruck unterwerfbar ist, wobei während der Trocknungsphase über das Ventil (52) bedarfweise Luft zuführbar ist, die bedarfsweise in einer Wärmequelle (55) über einen Wärmetauscher (54) aufheizbar ist.

7. Einrichtung nach einem der vorhergehenden Patentansprüche, dadurch gekennzeichnet, daß als Reinigungsflüssigkeit Tetrachloräthen bzw. mit Detergentien versetztes Wasser und als Treibmittel Tetrachloräthen bzw. Wasser Verwendung finden, die im Treibmittel-Vorratsbehälter (32) auf eine Temperatur von ca. -20°C bzw. maximal 2°C gekühlt sind.

8. Verfahren zur Trocknung des gereinigten bzw. entfetteten Waschgutes mit einer Einrichtung nach einem der Patentansprüche 1 bis 7, dadurch gekennzeichnet, daß nach dem Waschen bzw. Entfetten des Waschgutes mit mit Detergentien versetztem Wasser und nach Abfluß des Reinigungsmittels das Waschgut im Waschbehälter (11) einem Vakuum ausgesetzt und dabei wenigstens zeitweise atmosphärische Luft zugeführt wird.

9. Verfahren zur Trocknung des Inhalts des Siebkorbeinsatzes (24) mit einer Einrichtung nach einem der Patentansprüche 1 bis 7, dadurch gekennzeichnet, daß nach Abfluß des Reinigungsmittels der Auffangbehälter (15) einem Vakuum ausgesetzt und dabei wenigstens zeitweise atmosphärische Luft zugeführt wird.

10. Verfahren nach Patentanspruch 8 oder 9, dadurch gekennzeichnet, daß die zugeführte Luft bedarfsweise von einer Wärmequelle (55) über einen Wärmetauscher (54) beheizt wird.

## Claims

1. Drying apparatus for objects, such as workpieces which have been mechanically shaped, e.g., by turning or stamping (stock) in cleaning and/or degreasing plants comprising a cleaning fluid circuit with a cleaning reservoir and at least one closeable cleaning vessel (11) containing a stock carrier (16) for the objects to be cleaned; the apparatus further comprising stock drying means, recycling means for recycling cleaning fluid vapors arising in drying the stock and condensing means (35, 37) for condensation of the cleaning fluid vapor,
characterized in that the cleaning vessel being sealable from the atmosphere and also from the cleaning fluid circuit constitutes also a drying chamber for cleaning and drying the stock step by step is adapted to hold a vacuum and during a drying phase done by a vacuum pump (34) is connectable to the atmosphere by valve means (52a or 53, resp.) and that the vacuum pump is a jet pump agitated by the cleaning fluid feeded by a circulation pump.

2. Apparatus according to claim 1, characterized in that the cleaning vessel is connectable with the atmosphere via valve (52a) and throttling valve (53) during the drying phase and that the air before or in entering is heatable by a heat source (55) via heat exchanging means (54).

3. Apparatus according to anyone of the preceding claims, characterized in that the cleaning vessel (11) includes a cleaning chamber (10) and is connectable with a collecting vessel (15) by a shut-off valve (14), which collecting vessel (15) is connectable with the cleaning fluid reservoir (32) being on a higher level via return line means (45) for condensate.

4. Apparatus according to anyone of the preceding claims, characterized in that the cleaning chamber (10) is connecable with the cleaning fluid reservoir of the cleaning fluid circuit via a vent line (47) and with the atmosphere respectively the air supply (valve 52a) via an air supply line (49), wherein the vent line (47) is connected with the collecting vessel via a branch line (47a).

5. Apparatus according to anyone of the preceding claims, characterized in that a sieve basket insert (24) is horizontally displacable in the collecting vessel (15) and is detachable from this collecting vessel through an opening closable by cover (15a).

6. Apparatus according to claims 5, characterized in that the content of the sieve basket insert (24) if requested is connectable with an underpressure, when the shut-off valve (14) is opened and a valve (57) is closed, wherein during the drying phase air may pass the valve (52) which air is heatable in a heat source (55) through heat exchanging means (54), if requested.

7. Apparatur according to anyone of the preceding claims, characterized in that as cleaning fluid perchlorethylene or detergent-containing water, respectively, are used and as agitating fluid for agitating the jet pump perchlorethylene or water, respectively, are used, which are cooled to a temperature around - 20°C or maximal 2°C within the cleaning fluid reservoir (32).

8. Process for drying a cleaned or degreased, respectively, stock in an apparatus according to anyone of the claims 1 to 7, characterized in that after cleaning resp. degreasing the stock with detergent-containing water and after removing the cleaning fluid the stock is contacted with vacuum in the cleaning vessel, wherein partially atmospheric air is introduced.

9. Process for drying the content of the sieve basket insert (24) in an apparatus according to anyone of the claims 1 to 7, characterized in that after removing the cleaning fluid the collecting vessel is contacted with a vacuum, wherein partially atmospheric air is introduced.

10. Process according to claim 8 or 9, characterized in that the introduced air is heated by a heat source (55) via heat exchanging means (54), if requested.

## Revendications

1. Appareil pour sécher des objets, par exemple des pièces travaillées mécaniquement, telles que des pièces tournées et découpées (matériau lavé) dans des installations de nettoyage et/ou de dégraissage, comprenant un circuit de liquide de nettoyage dans lequel se trouvent au moins un réservoir pour le produit de nettoyage ainsi qu'au moins un récipient de lavage (11) pouvant être fermé et contenant un support de matériau lavé (16), et comprenant un dispositif pour sécher le matériau lavé, ainsi qu'un appareil pour récupérer les vapeurs de solvant produites lors du séchage du matériau lavé, avec un dispositif de refroidissement (35, 37) pour la condensation des vapeurs de solvant, caractérisé en ce que le récipient de lavage (11), pouvant être fermé à la fois vis-à-vis de l'atmosphère et vis-à-vis du circuit de liquide de nettoyage, constitue en même temps l'espace de séchage pour le lavage et le séchage par charges du matériau lavé, récipient de lavage qui est conçu pour la création d'un vide et dans lequel peut être admis de l'air, à travers une soupape (52a ou 53), pendant la phase de séchage, produite par une pompe à vide (34), et qu'une pompe à fluide moteur (pompe à jet 34), utilisant le produit de nettoyage comme fluide moteur, est prévue en tant que pompe à vide.

2. Appareil selon la revendication 1, caractérisé en ce que, pendant la phase de séchage, de l'air peut être admis dans le récipient de lavage (11) à travers la soupape (52a) et à travers la soupape d'étranglement (53), et que l'air amené peut être échauffé, avant son introduction, par une source de chaleur (55) par l'intermédiaire d'un échangeur de chaleur (54).

3. Appareil selon une des revendications précédentes, caractérisé en ce que le récipient de lavage (11), formant une chambre de nettoyage (10), peut être relié à travers une vanne de fermeture (14) à un récipient collecteur (15) qui communique par une conduite de retour de condensat (45) avec le réservoir de fluide moteur (32), placé à un niveau plus haut.

4. Appareil selon une des revendications précédentes, caractérisé en ce que la chambre de nettoyage (10) peut être reliée par une conduite d'échappement d'air (47) au réservoir de produit de nettoyage du circuit de produit de nettoyage et par une conduite d'admission d'air (49) à l'atmosphère ou à l'amenée d'air (soupape 52a), la conduite d'échappement d'air (47) communiquant avec le récipient collecteur (15) par une conduite de dérivation (47a).

5. Appareil selon une des revendications précédentes, caractérisé en ce qu'un panier tamiseur inséré (24) est déplaçable horizontalement dans le récipient collecteur (15) et peut être sorti verticalement de ce récipient à travers une ouverture susceptible d'être fermée par un couvercle (15a).

6. Dispositif selon la revendication 5, caractérisé en ce que le contenu du panier tamiseur inséré (24) peut être soumis, en cas de besoin, alors que la vanne de fermeture (14) est ouverte et la soupape (57) est fermée, à une dépression, tandis que, pendant la phase de séchage, de l'air peut être amené, en cas de besoin, à travers la soupape (52), air qui peut au besoin être échauffé par une source de chaleur (55) par l'intermédiaire d'un échangeur de chaleur (54).

7. Dispositif selon une des revendications précédentes, caractérisé en ce que, comme liquide de nettoyage, du tétrachloréthène ou de l'eau mélangée avec des détergents est utilisé et, comme fluide moteur, du tétrachloréthène ou de l'eau est utilisé, qui est refroidi dans le réservoir de fluide moteur (32) à une température de respectivement - 20° C environ et 2° C au maximum.

8. Procédé pour sécher le matériau lavé, nettoyé ou dégraissé, au moyen d'un appareil selon une des revendications 1 à 7, caractérisé en ce que, après le lavage ou le dégraissage du matériau par de l'eau mélangée avec des détergents et après l'écoulement du produit de nettoyage, on soumet le matériau lavé à un vide dans le récipient de lavage (11) pendant qu'on amène de l'air atmosphérique au moins temporairement dans ce récipient.

9. Procédé pour sécher le contenu du panier tamiseur inséré (24) au moyen d'un appareil selon une des revendications 1 à 7, caractérisé en ce que, après l'écoulement du produit de nettoyage, on soumet le récipient collecteur (15) à un vide et on amène de l'air atmosphérique au moins temporairement à ce récipient pendant ce temps.

10. Procédé selon la revendication 8 ou 9, caractérisé en ce que l'on chauffe l'air amené au besoin par une source de chaleur (55) par l'intermédiaire d'un échangeur de chaleur (54).
